# EUROPEAN PATENT APPLICATION

(11) **EP 3 806 432 A1**
(43) Date of publication of application: **14.04.2021**
(21) Application number: 20775162.9
(22) Date of filing: 13.03.2020
(51) Int. Cl.: H04L 29/08

(54) **METHOD FOR CHANGING SERVICE ON DEVICE AND SERVICE CHANGING SYSTEM**

(30) Priority: 26.08.2019 CN 201910789155
(71) Applicant: Wangsu Science & Technology Co., Ltd., Shanghai 200030 (CN)
(72) Inventor: CHEN, Qiang, Shanghai 200030 (CN)
(74) Representative: Vinsome, Rex Martin
(86) International application number: PCT/CN2020/079354
(87) International publication number: WO 2021/036229

(57) **Abstract**

The present disclosure discloses a method for changing a device business and a business change system, which belongs to network communication technology. The method includes: acquiring a business change task and determining a target server room node and a target network business that correspond to the business change task (301); determining, based on a preset intelligent device selection model, a target device in the target server room node according to device demand information of the target network business, and network resource usage status and hardware resource redundancy status of a device in the target server room node (302); and deploying a service software of the target network business on the target device and updating service cluster information and business flow planning of the target device (303).

## Description

### CROSS REFERENCE TO RELATED APPLICATIONS

The present disclosure refers to Chinese patent application No. 201910789155.0, entitled "METHOD FOR CHANGING DEVICE BUSINESS AND BUSINESS CHANGE SYSTEM," filed on August 26, 2019, which is incorporated by reference herein in its entirety.

### TECHNICAL FIELD

The present disclosure relates to network communication technology, in particular to a method for changing a device business and a business change system.

### BACKGROUND

With the rapid development of the Internet, the variety of network business is becoming more and more abundant and the scale is getting larger and larger. In order to meet users' increasing demands for access to the network business, an integrated business platform similar to a content delivery network (CDN) system appears. The integrated business platform may use multiple devices in a server room node to provide business services of various network businesses for the users.

In order to meet business requirements of various network businesses and ensure business qualities of the network business, the integrated business platform needs to purchase a large amount of hardware resources (i.e., device) and network resources (e.g., bandwidth upper limit and IP number) to support the operation of the business service. Based on cost reduction concerns, technicians of the integrated business platform may periodically detect hardware resource redundancy corresponding to each network business in each server room node of the integrated business platform, and then consider whether to carry out business conversion on the device with higher resource redundancy according to the resource requirement corresponding to the network business. That is, the business on the device with higher redundancy is converted into the business in urgent need of hardware resources within one server room node, thus improving the reuse degree of the device to appropriately reduce the redundancy of hardware resources and achieve the purpose of cost reduction.

In the process of implementing the present disclosure, the inventor finds at least the following problems in the existing technology. The business on the device is converted according to a manual detection method. In one aspect, the device resource redundancy evaluated manually may be inaccurate, which may lead to invalid or erroneous business conversion. In another aspect, the manual detection method requires a certain amount of time to determine a result of the conversion, so the timeliness of the business conversion is poor. In yet another aspect, since there are a large number of server room nodes in the integrated business platform and a large number of devices in one server room node, the manual detection method may take up a lot of labor costs.

### SUMMARY

In order to solve the problems in the existing technology, embodiments of the present disclosure provide a method for changing a device business and a business change system, and the technical solutions are as follows.

In a first aspect, a method for changing a device business is provided. The method includes:
acquiring a business change task and determining a target server room node and a target network business that correspond to the business change task;
determining, based on a preset intelligent device selection model, a target device in the target server room node according to device demand information of the target network business, a network resource usage status and a hardware resource redundancy status of a device in the target server room node; and
deploying a service software of the target network business on the target device and updating service cluster information and business flow planning of the target device.

In an embodiment, determining, based on the preset intelligent device selection model, the target device in the target server room node according to the device demand information of the target network business, and the network resource usage status and the hardware resource redundancy status of the device in the target server room node includes:
querying the device demand information of the target network business and searching for all optional network businesses matched with the device demand information of the target network business;
determining, based on the preset intelligent device selection model, all optional devices according to the hardware resource redundancy status of the device to which each of the optional network businesses belongs; and
determining, based on the intelligent device selection model, the target device among all the optional devices according to the network resource usage status of each of the optional devices.

In this way, a device with a high hardware matching degree is intelligently selected for the target network business to generate a resource pool, and then a final device is determined according to the resource redundancy status of each device, so that the target device may be selected more quickly and accurately.

In an embodiment, determining, based on the intelligent device selection model, the target device among all the optional devices according to the network resource usage status of each of the optional devices includes:
determining, based on the intelligent device selection model, the target device among all the optional devices according to the network resource usage status of each of the optional devices and a device group architecture corresponding to each of the optional devices.

In this way, by considering the device group architecture of the device during selecting the target device and selecting the target device in a device group with similar device group architecture, a success rate of the business change and the service quality of the changed business may be ensured to some degree.

In an embodiment, determining, based on the intelligent device selection model, the target device among all the optional devices according to the network resource usage status of each of the optional devices includes:
determining, based on the intelligent device selection model, the target device among all the optional devices according to the network resource usage status of each of the optional devices and a preset business analysis strategy, where the business analysis strategy at least includes a lowest cost strategy, a best quality strategy or a cost-quality balance strategy.

In this way, technicians may manually configure the business analysis strategy and guide the process that the business change system selects the target device, so as to ensure different degrees of cost or quality requirements of the integrated business platform.

In an embodiment, the method further includes:
detecting periodically, for any sever room node, the hardware resource redundancy status of the device in the server room node;
analyzing the hardware resource redundancy status based on a big data analysis technology, and judging whether a preset business change condition is met; and
generating a business change task for the server room node if the preset business change condition is met.

In this way, by intelligently analyzing the resource usage status of each device in the server room node through the big data analysis technology, the processing of the business change may be triggered timely and accurately. Compared with the processing of the business change triggered completely manually, the cost of a manual management may also be greatly reduced.

In an embodiment, the business change condition is that, within a preset duration, both a device with a hardware resource redundancy continuously greater than a first threshold and a device with the hardware resource redundancy continuously less than a second threshold exist in the server room node, and the first threshold is greater than the second threshold.

In this way, by comparing the hardware resource redundancy of the device with the threshold, devices in idle state or devices in overloaded state may be determined more clearly, so that the business change process may be triggered timely and accurately.

In an embodiment, acquiring the business change task and determining the target server room node and the target network business that correspond to the business change task includes:
acquiring the business change task and storing the business change task into a to-be-reviewed task library; and
determining the target server room node and the target network business that correspond to the business change task when it is detected that a review status of the business change task is PASS.

In this way, by adding a manual review procedure before executing the business change, the accuracy and necessity of the business change may be ensured and invalid or erroneous business change tasks may be prevented from being executed.

In an embodiment, after updating the service cluster information and the business flow planning of the target device, the method further includes:
detecting a latest hardware resource redundancy status and a latest network resource usage status of the target server room node and business quality of the target network business, and adjusting the intelligent device selection model.

In this way, by detecting the resource usage status of each device in the server room node after the business change is performed, and tuning the business change system based on a detection result, the business change processing may be may continuously optimized, and the accuracy of the business change and the service quality of the server room node may be ensured.

In an embodiment, the method further includes:
receiving a business change instruction that is manually input, and periodically or regularly generating the business change task according to a business change time in the business change instruction.

In this way, a technician may preset the business change instruction to trigger the business change task regularly or periodically, so that the business change processing may be executed in a timely manner.

In a second aspect, a business change system is provided. The business change system includes:
a task receiving layer, configured to acquire a business change task and determine a target server room node and a target network business that correspond to the business change task;
an intelligent analysis layer, configured to determine, based on a preset intelligent device selection model, a target device in the target server room node according to device demand information of the target network business, a network resource usage status and a hardware resource redundancy status of a device in the target server room node; and
a business deployment layer, configured to deploy a service software of the target network business on the target device and update service cluster information and business flow planning of the target device.

In an embodiment, the intelligent analysis layer is specifically configured to:
query the device demand information of the target network business and search for all optional network businesses matched with the device demand information of the target network business;
determine, based on the preset intelligent device selection model, all optional devices according to the hardware resource redundancy status of the device to which each of the optional network businesses belongs; and
determine, based on the intelligent device selection model, the target device among all the optional devices according to the network resource usage status of each of the optional devices.

In an embodiment, the intelligent analysis layer is specifically configured to:
determine, based on the intelligent device selection model, the target device among all the optional devices according to the network resource usage status of each of the optional devices and a device group architecture corresponding to each of the optional devices.

In an embodiment, the intelligent analysis layer is specifically configured to:
determine, based on the intelligent device selection model, the target device among all the optional devices according to the network resource usage status of each of the optional devices and a preset business analysis strategy, where the business analysis strategy at least includes a lowest cost strategy, a best quality strategy or a cost-quality balance strategy.

In an embodiment, the business change system further includes a task generation layer which is configured to:
detect periodically, for any sever room node, the hardware resource redundancy status of the device in the server room node;
analyze the hardware resource redundancy status based on a big data analysis technology, and judge whether a preset business change condition is met; and
generate a business change task for the server room node if the preset business change condition is met.

In an embodiment, the business change condition is that, within a preset duration, both a device with a hardware resource redundancy continuously greater than a first threshold and a device with the hardware resource redundancy continuously less than a second threshold exist in the server room node, and the first threshold is greater than the second threshold.

In an embodiment, the task receiving layer is specifically configured to:
acquire the business change task and store the business change task into a to-be-reviewed task library; and
determine the target server room node and the target network business that correspond to the business change task when it is detected that a review status of the business change task is PASS.

In an embodiment, the business change system further includes a system tuning layer which is configured to:
detect a latest hardware resource redundancy status and a latest network resource usage status of the target server room node and business quality of the target network business, and adjust the intelligent device selection model.

In an embodiment, the task receiving layer is further configured to:
receive a business change instruction that is manually input, and periodically or regularly generate the business change task according to a business change time in the business change instruction.

In a third aspect, a network device is provided. The network device includes a processor and a memory, where the memory stores at least one instruction, at least one program, a code set or an instruction set, and the at least one instruction, the at least one program, the code set or the instruction set is loaded and executed by the processor to implement processing of the task receiving layer, the intelligent analysis layer and the business deployment layer in the business change system as described in the second aspect.

In a fourth aspect, a computer readable storage medium is provided. The storage medium stores at least one instruction, at least one program, a code set or an instruction set, and the at least one instruction, the at least one program, the code set or the instruction set is loaded and executed by a processor to implement processing of the task receiving layer, the intelligent analysis layer and the business deployment layer in the business change system as described in the second aspect.

The technical solution provided in the embodiments of the present disclosure has the following beneficial effects. In the embodiments of the present disclosure, the business change task is acquired and the target server room node and the target network business that correspond to the business change task are determined. The target device is determined, based on the preset intelligent device selection model, in the target server room node according to the device demand information of the target network business, the network resource usage status and the hardware resource redundancy status of the device in the target server room node. The service software of the target network business is deployed on the target device, and the service cluster information and the business flow planning of the target device are updated. In this way, compared with the manual detection, the manner that intelligently analyzing various resource data of the server room node and the device demand of the network business, quickly and accurately selecting the device for the business change and performing the business change processing has higher efficiency and accuracy, requires lower labor cost, and can reduce human errors in the operation process with a great probability.

### BRIEF DESCRIPTION OF THE DRAWINGS

In order to illustrate the technical solutions in the embodiments of the present disclosure more clearly, the accompanying drawings used in the description of the embodiments are briefly described below. It is apparent that the accompanying drawings in the following description are only some embodiments of the present disclosure. For those skilled in the art, other drawings may also be obtained according to these drawings without any creative work.
FIG. 1 is a network framework diagram of an integrated business platform provided in an embodiment of the present disclosure;
FIG. 2 is a schematic frame diagram of a business change system provided in an embodiment of the present disclosure;
FIG. 3 is a schematic flow chart of a method for changing a device business provided in an embodiment of the present disclosure;
FIG. 4 is a schematic frame diagram of another business change system provided in an embodiment of the present disclosure;
FIG. 5 is a schematic frame diagram of still another business change system provided in an embodiment of the present disclosure.

### DETAILED DESCRIPTION

In order to make the objectives, technical solutions and advantages of the present disclosure clearer, embodiments of the present disclosure will be described in detail below with reference to the accompanying drawings.

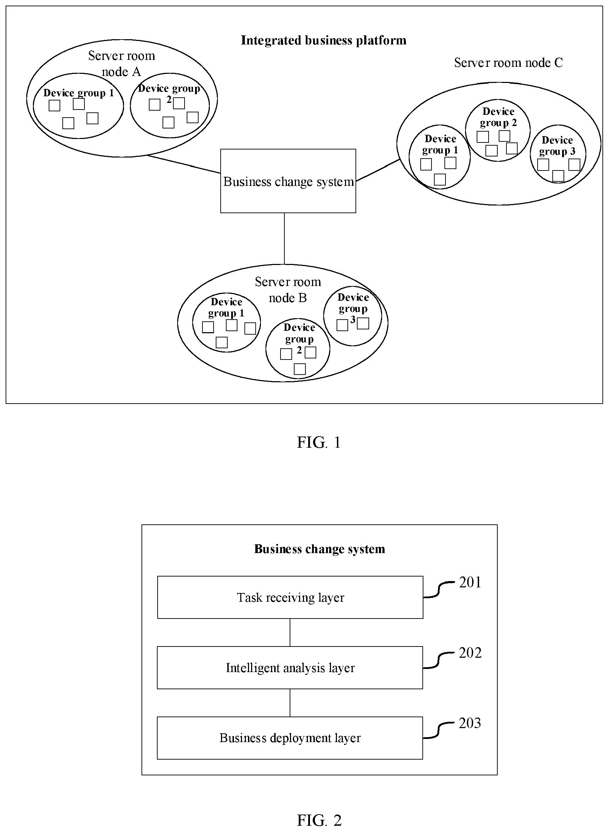

An embodiment of the present disclosure provides a method for changing a device business and an execution subject of the method may be a business change system that is deployed in an integrated business platform. Herein, as shown in FIG. 1, there may be multiple server room nodes in the integrated business platform, and there may be multiple device groups in the server room node. Each of the device groups contains multiple devices that provide the same network business service externally, and each of the devices is only configured to provide one network business service. This embodiment takes a CDN platform as the integrated business platform as an example to illustrate, and other situations are similar. The business change system may be configured to collect a hardware resource redundancy status and a network resource usage status of each of the server room nodes in the integrated business platform, and then intelligently analyze the collected data, so as to perform business change processing in the server room node, that is, to replace a service software on the device with a high hardware resource redundancy. For example, as shown in FIG. 2, the business change system may mainly include a task receiving layer, an intelligent analysis layer and a business deployment layer. Herein, the task receiving layer may submit a business change task that is acquired to the intelligent analysis layer for analyzing, determine a specific content which requires the business change, and then execute the specific processing of the business change through the business deployment layer.

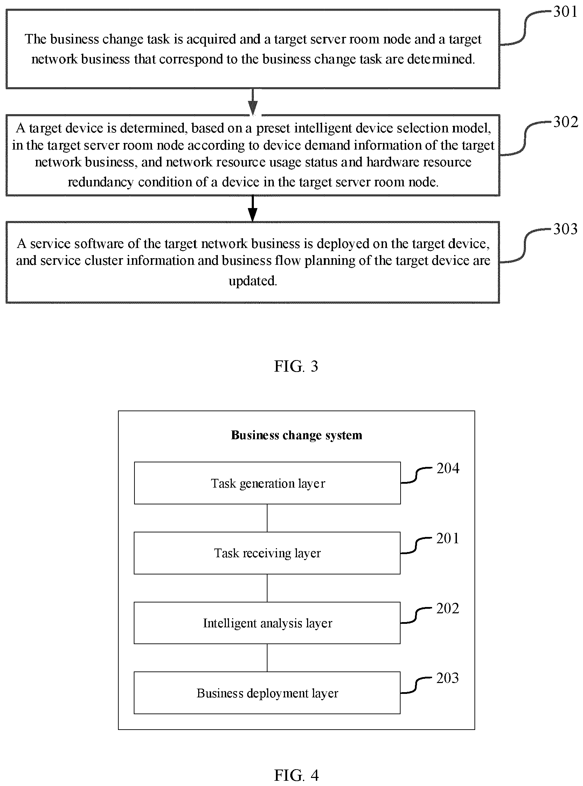

The processing flow shown in FIG. 3 will be described in detail below with reference to specific embodiments, and the content may be as follows.

In step 301, the business change task is acquired, and a target server room node and a target network business that correspond to the business change task are determined.

In the implementation, the business change system may provide a task input interface externally. Technicians of the integrated business platform may input corresponding business change tasks in the task input interface according to source demands of different businesses, and specifically, may input task configuration information including information of the server room node, information of the network business, source demand quantity and business change reasons in the task change interface. In this way, after the technicians of the integrated business platform log in the above task input interface and add the business change task, the business change system may acquire the business change task, then read the task configuration information in the business change task, and further determine the target server room node and the target network that business correspond to the business change task.

In this embodiment, the technicians may control the business change system to generate the business change task periodically or regularly in the form of a business change instruction in advance. Specifically, the technicians may input the business change instruction in the business change system in advance according to the source demands of different businesses. In addition to the task configuration information, the business change instruction may also be added with a business change time, which may be a specific task trigger time or a task trigger period. In this way, after receiving the business change instruction that is manually input, the business change system may read the business change time in the business change instruction, and then may periodically or regularly generate the business change tasks according to a specific form of the business change time, thus triggering subsequent processing.

In step 302, a target device is determined, based on a preset intelligent device selection model, in the target server room node according to device demand information of the target network business, a network resource usage status and a hardware resource redundancy status of a device in the target server room node.

Herein, the network resource usage status may include information such as a real-time bandwidth proportion, a network operator to which the network resource belongs, an IP address that the network resource occupies and the like. The hardware resource redundancy status may specifically be load information of the hardware of the device such as a memory, a network adapter, a CPU, a hard disk and the like.

In the implementation, the business deployment layer of the business change system may be configured with the intelligent device selection model in advance, and the intelligent device selection model may be mainly configured to monitor a service status of each server room node of the integrated business platform and intelligently analyze and calculate each business change task, so as to determine the device which is able to carry out the business change. In this way, after determining the target server room node and the target network that business correspond to the business change task, the business change system may acquire basic information such as the device demand information of the target network business, the network resource usage status and the hardware resource redundancy status of the device in the target server room node and the like, and then may determine the target device (i.e., the device for deploying the target network business) in the target server room node based on the above basic information and the preset intelligent device selection model.

In an embodiment, when intelligently determining the target device, the network business that is able to be replaced may be screened first, and then an optional device pool may be generated to further determine the target device. Correspondingly, the processing in step 302 may be specifically as follows: querying the device demand information of the target network business and searching for all optional network businesses matched with the device demand information of the target network business; determining, based on the preset intelligent device selection model, all optional devices according to the hardware resource redundancy status of the device to which each of the optional network businesses belongs; and determining, based on the intelligent device selection model, the target device among all the optional devices according to the network resource usage status of each of the optional devices.

Herein, the device demand information may be all hardware configuration information required by the device when running the network business, for example, the network business requires a memory capacity of at least 1000M, a network adapter with a transmission rate of at least 50Mbps, a CPU of at least 4 threads and hard disk space of at least 20G.

In the implementation, in the process of determining the target device corresponding to the business change task, the business change system may first query the device demand information of the target network business, and then search for all the optional network business matched with the device demand information of the target network business among all the network businesses supported by the target server room node. The "match" here means that the device demand information of the optional network business is the same as that of the target network business, or the device demand of the optional network business covers the device demand of the target network business For example, the target network business requires the memory of 1000M and the CPU of 4 threads. If the optional network business requires the memory of 1200M, the CPU of 6 threads and other hardware configurations, it may be considered that the device demand of the optional network business covers the device demand of the target network business. However, if the memory required by the optional network business is less than 1000M or no memory is required, alternatively, if the CPU required by the optional network business is less than 4 threads or no CPU is required, it may be considered that the device demand of the optional network business does not cover the device demand of the target network business). It is certain that, when searching for the optional network business, only the key hardware configuration information (i.e., the minimum hardware configuration information required to realize the target network business) in the device demand information of the target network business may be used for matching.

After that, the business change system may determine the devices to which the above optional network businesses in the target server room node belong, and then acquire the hardware resource redundancy status of these devices and input the hardware resource redundancy status into the preset intelligent device selection model, so that the optional device pool containing all the optional devices may be generated. In this embodiment, the business change system may acquire the network resource usage status of each of the optional devices in the optional device pool, then input the network resource usage status into the above intelligent device selection model, and finally determine the target device among all the optional devices in the optional device pool.

In an embodiment, when determining the target device in the optional device pool, a device group architecture corresponding to the optional device may also be referenced. The corresponding processing may be as follows: determining, based on the intelligent device selection model, the target device among all the optional devices according to the network resource usage status of each of the optional devices and the device group architecture corresponding to each of the optional devices.

Herein, the device group architecture may be a server architecture of the device group to which the device belongs. For example, the device group architecture may be a load balancing architecture composed of multiple devices, a master-backup architecture, a cluster architecture or the like. Alternatively, the device group architecture may further be hierarchically divided into a multi-layer architecture.

In the implementation, after generating the optional device pool using the hardware resource redundancy status, the business change system may further acquire the network resource usage status of each of the optional devices in the optional device pool and the device group architecture of each of the optional devices, and then input the above information into the intelligent device selection model. Furthermore, the business change system may determine, among the optional devices, the target device of which the device group architecture is consistent with the device group architecture required by the target network business.

In an embodiment, before the business change system executes the business change task, the technicians may also preset a business analysis strategy for guiding the intelligent device selection model to select the target device. The corresponding processing may be as follows: determining, based on the intelligent device selection model, the target device among all the optional devices according to the network resource usage status of each of the optional devices and the preset business analysis strategy.

Herein, the business analysis strategy at least includes a lowest cost strategy, a best quality strategy or a cost-quality balance strategy. It is certain that this embodiment still supports other feasible business analysis strategies in addition to a trade-off between the cost and the quality.

In the implementation, the technicians of the integrated business platform may preset the business analysis strategy in the business change system, where the business analysis strategy is followed by the business change system when executing the business change. Through the business analysis strategy, the selection processing of the business change system to the device may be guided to a certain extent. For example, when the business analysis strategy is the lowest cost strategy, the business change system may preferentially deploy the network business on the device with the lowest operating cost. On the contrary, when the business analysis strategy is the best quality strategy, the business change system may preferentially deploy the network business on the device with the best service quality. And when the business analysis strategy is the cost-quality balance strategy, the business change system may select the device based on the comprehensive consideration of the business operating cost and the service quality. Therefore, the business change system may further acquire the network resource usage status of each of the optional devices in the optional device pool and the business analysis strategy preset by the technician after generating the optional device pool using the hardware resource redundancy status, and then input the above acquired information into the intelligent device selection model. Furthermore, the business change system may determine the target device among the optional devices according to the business analysis strategy.

In step 303, a service software of the target network business is deployed on the target device, and service cluster information and business flow planning of the target device are updated.

Herein, the service cluster information may include information such as business cluster information corresponding to the device, type information of the provided network business, a type of the deployed service software, hardware information, an external network IP, a device number, a network architecture to which the device belongs and the like.

In the implementation, the business change system may unload the service software of the network business deployed on the target device through a specified operation after determining the target device, and then deploy the service software of the target network business on the target device. At the same time, the business change system may remove the existing service cluster information of the target device and generate and publish the latest service cluster information. Furthermore, the business change system may also update the business flow planning of the target device based on the redeployed service software, that is, cut off the business flow of an original network business on the target device and arrange the business flow of the target network business to the target device. It should be noted that in step 303, the business change system may only be an operation instruction generator of the relevant processing, and the business change system may trigger other systems in the integrated business platform to execute corresponding specific processing by sending the operation instruction. In addition, before the service software of the target network business is deployed, the target device determined in step 302 may also be manually reviewed. If the review passes, the business change system may execute step 303. If the review fails, the business change system needs to re-execute step 302 or manually designate a new target device.

In an embodiment, the business change system may also monitor the service status of the device in the server room node, and intelligently analyze a monitoring result to generate the business change task automatically. The corresponding processing may be as follows: detecting periodically, for any server room node, the hardware resource redundancy status of the device in the server room node; analyzing the hardware resource redundancy status based on big data analysis technology, and judging whether a preset business change condition is met; and generating the business change task for the server room node if the preset business change condition is met.

In the implementation, for any server room node of the integrated business platform, the business change system may periodically detect all devices in the server room node to acquire the hardware resource redundancy status of each of the devices. After that, the business change system may intelligently analyze the acquired hardware resource redundancy status based on the big data analysis system to determine a current service capability and the resource redundancy of each of the devices. In this embodiment, the business change system may judge whether the above intelligent analysis result meets the preset business change condition. The business change condition may be preset by the technicians of the integrated business platform. For example, the business change condition may be set as that "the resource redundancy of one of the devices in the server room node is greater than 50%, and a device with the resource redundancy less than 90% for a long time exists at the same time, then the business change is triggered". In this way, if the intelligent analysis result of the business change system meets a preset business change condition, the generation of the business change task for corresponding server room node may be automatically triggered.

In this embodiment, the business change system may set the business change condition based on comprehensive consideration of the hardware resource redundancy of each of the devices in the server room node. Therefore, the business change condition may be set as that, within a preset duration, both the device with the hardware resource redundancy continuously greater than a first threshold and the device with the hardware resource redundancy continuously less than a second threshold exist in the server room node, where the first threshold is greater than the second threshold. That is, both the device being in a state of insufficient hardware resources for a long time and the device being in a state of redundant hardware resources for a long time exist in the server room node. In this way, the business change system may automatically trigger the generation of the business change task and perform the business change processing on the devices in the above two states.

In an embodiment, the business change system further supports the review processing on the business change task, and the business change is executed only after the review is passed. Correspondingly, the processing in step 301 may be as follows: acquiring the business change task and storing the business change task into a to-be-reviewed task library; and determining the target server room node and the target network business that correspond to the business change task when it is detected that a review status of the business change task is PASS.

In the implementation, after acquiring the business change task, the business change system may store the business change task into the to-be-reviewed task library first, then wait for the technicians of the integrated business platform to manually review the business change task and send a task review notification to the technicians at the same time. In this way, the technicians may log into a task review page provided by the business change system to review the business change task. If the review is passed, the business change system may detect that the review status of the business change task is PASS, and may further perform the subsequent business change processing, that is, determine the target server room node and target network business that correspond to the business change task first. It should be noted that the above review processing may be applied to the business change task that is manually input and may also be applied to the business change task that is automatically generated by the business change system. For the business change task that is manually input, a certain degree of correctness exists in the business change since there is manual participation. Thus, the business change system may directly execute the corresponding business change system if the business change task manually input has not been reviewed within a specified duration. For the business change task automatically generated by the business change system, in order to avoid erroneous or invalid business change, the business change system may delete the business change task if the business change task automatically generated has not been reviewed with the specified duration.

In an embodiment, the business change system may also perform a system tuning through the result of the business change. Correspondingly, after step 303, the following processing may be as follows: detecting the latest hardware resource redundancy condition and the latest network resource usage status of the target server room node and the business quality of the target network business, and adjusting the intelligent device selection model.

In the implementation, after performing the business change processing, the business change system may detect the latest hardware resource redundancy status and the latest network resource usage of the target server room node, and may also detect the business quality of the target network business at the same time, so as to analyze the effect of the business change performed this time through the above detection result, thus adjusting the intelligent device selection model. In addition, the business change system may further record and display the entire process of the business change, so that the technicians may understand the business change process more intuitively and clearly.

In the embodiments of the present disclosure, the business change task is acquired, and the target server room node and the target network business that correspond to the business change task are determined. The target device is determined, based on the preset intelligent device selection model, in the target server room node according to the device demand information of the target network business, and the network resource usage status and the hardware resource redundancy status of the device in the target server room node. The service software of the target network business is deployed on the target device, and the service cluster information and the business flow planning of the target device are updated. In this way, compared with the manual detection , the manner that intelligently analyzing various resource data of the server room node and the device demand of the network business, quickly and accurately selecting the device for the business change and performing the business change processing has higher efficiency and accuracy, requires lower labor cost, and can reduce human errors in the operation process with a great probability.

Based on the same technical concept, an embodiment of the present disclosure further provides a business change system. As shown in FIG. 2, the business change system includes:
a task receiving layer 201, configured to acquire a business change task and determine a target server room node and a target network business that correspond to the business change task;
an intelligent analysis layer 202, configured to determine, based on a preset intelligent device selection model, a target device in the target server room node according to device demand information of the target network business, a network resource usage status and a hardware resource redundancy status of a device in the target server room node; and
a business deployment layer 203, configured to deploy a service software of the target network business on the target device and update service cluster information and business flow planning of the target device.

In an embodiment, the intelligent analysis layer 202 is specifically configured to:
query the device demand information of the target network business and search for all optional network businesses matched with the device demand information of the target network business;
determine, based on the preset intelligent device selection model, all optional devices according to the hardware resource redundancy status of the device to which each of the optional network businesses belongs; and
determine, based on the intelligent device selection model, the target device among all the optional devices according to the network resource usage status of each of the optional devices.

In an embodiment, the intelligent analysis layer 202 is specifically configured to:
determine, based on the intelligent device selection model, the target device among all the optional devices according to the network resource usage status of each of the optional devices and a device group architecture corresponding to each of the optional devices.

In an embodiment, the intelligent analysis layer 202 is specifically configured to:
determine, based on the intelligent device selection model, the target device among all the optional devices according to the network resource usage status of each of the optional devices and a preset business analysis strategy, where the business analysis strategy at least includes a lowest cost strategy, a best quality strategy or a cost-quality balance strategy.

In an embodiment, as shown in FIG. 4, the business change system further includes a task generation layer 204, which is configured to:
detect periodically, for any sever room node, the hardware resource redundancy status of the device in the server room node;
analyze the hardware resource redundancy status based on a big data analysis technology, and judge whether a preset business change condition is met; and
generate a business change task for the server room node if the preset business change condition is met.

In an embodiment, the business change condition is that, within a preset duration, both a device with a hardware resource redundancy continuously greater than a first threshold and a device with the hardware resource redundancy continuously less than a second threshold exist in the server room node, and the first threshold is greater than the second threshold.

In an embodiment, the task receiving layer 201 is specifically configured to:
acquire the business change task and store the business change task into a to-be-reviewed task library; and
determine the target server room node and the target network business that correspond to the business change task when it is detected that a review status of the business change task is PASS.

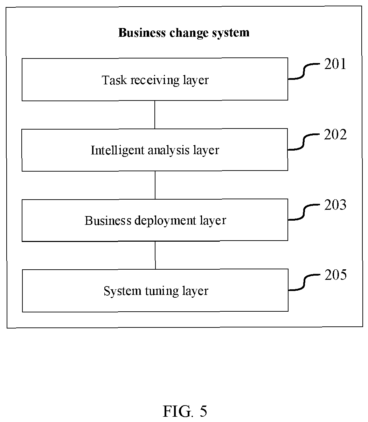

In an embodiment, as shown in FIG. 5, the business change system further includes a system tuning layer 205, which is configured to:
detect a latest hardware resource redundancy status and a latest network resource usage status of the target server room node and business quality of the target network business, and adjust the intelligent device selection model.

In an embodiment, the task receiving layer is further configured to:
receive a business change instruction that is manually input, and periodically or regularly generate the business change task according to a business change time in the business change instruction.

In the embodiments of the present disclosure, the business change task is acquired, and the target server room node and the target network business that correspond to the business change task are determined. The target device is determined, based on the preset intelligent device selection model, in the target server room node according to the device demand information of the target network business, the network resource usage status and the hardware resource redundancy status of the device in the target server room node. The service software of the target network business is deployed on the target device, and the service cluster information and the business flow planning of the target device are updated. In this way, compared with the manual detection, the manner that intelligently analyzing various resource data of the server room node and the device demand of the network business, quickly and accurately selecting the device for the business change and performing the business change processing has higher efficiency and accuracy, requires lower labor cost, and can reduce human errors in the operation process with a great probability.

Those skilled in the art may understand that all or some steps of the above embodiments may be completed by hardware, or by a program instructing related hardware, and the program may be stored in a computer readable storage medium. The storage medium mentioned above may be a read-only memory, a magnetic disk, an optical disk or the like.

The above description is only some embodiments of the present disclosure, which are not intended to limit the present disclosure. Any modifications, equivalent substitutions, improvements or the like made within the spirit and principle of the present disclosure shall be included in the protection scope of the present disclosure.

## Claims

1. A method for changing a device business, comprising:
acquiring a business change task and determining a target server room node and a target network business that correspond to the business change task;
determining, based on a preset intelligent device selection model, a target device in the target server room node according to device demand information of the target network business, a network resource usage status and a hardware resource redundancy status of a device in the target server room node; and
deploying a service software of the target network business on the target device and updating service cluster information and business flow planning of the target device.

2. The method according to claim 1, wherein determining, based on the preset intelligent device selection model, the target device in the target server room node according to the device demand information of the target network business, and the network resource usage status and the hardware resource redundancy status of the device in the target server room node comprises:
querying the device demand information of the target network business and searching for all optional network businesses matched with the device demand information of the target network business;
determining, based on the preset intelligent device selection model, all optional devices according to the hardware resource redundancy status of the device to which each of the optional network businesses belongs; and
determining, based on the intelligent device selection model, the target device among all the optional devices according to the network resource usage status of each of the optional devices.

3. The method according to claim 2, wherein determining, based on the intelligent device selection model, the target device among all the optional devices according to the network resource usage status of each of the optional devices comprises:
determining, based on the intelligent device selection model, the target device among all the optional devices according to the network resource usage status of each of the optional devices and a device group architecture corresponding to each of the optional devices.

4. The method according to claim 2, wherein determining, based on the intelligent device selection model, the target device among all the optional devices according to the network resource usage status of each of the optional devices comprises:
determining, based on the intelligent device selection model, the target device among all the optional devices according to the network resource usage status of each of the optional devices and a preset business analysis strategy, wherein the business analysis strategy at least comprises a lowest cost strategy, a best quality strategy or a cost-quality balance strategy.

5. The method according to claim 1, wherein the method further comprises:
detecting periodically, for any sever room node, the hardware resource redundancy status of the device in the server room node;
analyzing the hardware resource redundancy status based on a big data analysis technology, and judging whether a preset business change condition is met; and
generating a business change task for the server room node if the preset business change condition is met.

6. The method according to claim 5, wherein the business change condition is that, within a preset duration, both a device with a hardware resource redundancy continuously greater than a first threshold and a device with the hardware resource redundancy continuously less than a second threshold exist in the server room node, and the first threshold is greater than the second threshold.

7. The method according to claim 1, wherein acquiring the business change task and determining the target server room node and the target network business that correspond to the business change task comprises:
acquiring the business change task and storing the business change task into a to-be-reviewed task library; and
determining the target server room node and the target network business that correspond to the business change task when it is detected that a review status of the business change task is PASS.

8. The method according to claim 1, wherein after updating the service cluster information and the business flow planning of the target device, the method further comprises:
detecting a latest hardware resource redundancy status and a latest network resource usage status of the target server room node and business quality of the target network business, and adjusting the intelligent device selection model.

9. The method according to claim 1, wherein the method further comprises:
receiving a business change instruction that is manually input, and periodically or regularly generating the business change task according to a business change time in the business change instruction.

10. A business change system, comprising:
a task receiving layer, configured to acquire a business change task and determine a target server room node and a target network business that correspond to the business change task;
an intelligent analysis layer, configured to determine, based on a preset intelligent device selection model, a target device in the target server room node according to device demand information of the target network business, a network resource usage status and a hardware resource redundancy status of a device in the target server room node; and
a business deployment layer, configured to deploy a service software of the target network business on the target device and update service cluster information and business flow planning of the target device.

11. A network device, comprising:
at least one processor; and,
a memory communicatively connected to the at least one processor; wherein,
the memory stores an instruction executable by the at least one processor, and the instruction is executed by the at least one processor to cause the at least one processor to perform processing of the task receiving layer, the intelligent analysis layer, and the business deployment layer in the business change system according to claim 10.

12. A computer readable storage medium storing a computer program which, when executed by a processor, performs processing of the task receiving layer, the intelligent analysis layer, and the business deployment layer in the business change system according to claim 10.
